# EUROPEAN PATENT APPLICATION

(11) **EP 4 632 508 A1**
(43) Date of publication of application: **15.10.2025**
(21) Application number: 25164126.2
(22) Date of filing: 17.03.2025
(51) Int. Cl.: G05B 19/042, G05B 19/05

(54) **METHODS AND SYSTEMS FOR GENERATING PROGRAMMABLE LOGIC CONTROLLER CODE USING LARGE LANGUAGE MODELS**

(30) Priority: 12.04.2024 US 202463633534 P; 05.09.2024 US 202418825798
(71) Applicant: Schneider Electric USA, Inc., Boston, MA 02108 (US)
(72) Inventor: DARIE, Alexandru, Boston, 02108 (US); MAKHOUL, Khaldoun, Boston, 02108 (US); GHOSH, Mohua, Boston, 02108 (US)
(74) Representative: Friese Goeden Patentanwälte PartGmbB

(57) **Abstract**

Relatively simple user input is used to build an entire application. Input data defines a set of specifications for an automated machine. The set of specifications includes one or more of hardware specifications, operating systems, software frameworks, runtime environments, network connectivity, and environmental considerations. The input data is analyzed to retrieve relevant information from a large corpus including a plurality of libraries. One or more prompts are generated based on the relevant information, and the one or more prompts are used to generate programmable logic controller (PLC) code including a sequence of operations for controlling the automated machine.

## Description

### BACKGROUND

Engineers may generate programmable logic controller (PLC) code for use in automation and control systems. Using known methods and systems to gain a thorough understanding of an automation and/or control system can be tedious and/or time-consuming. For example, at least some engineers may watch machine videos, read operator manuals, and/or have multiple discussions with users to gather high-level machine requirements. Moreover, known tools for developing automation and control systems involve time-consuming steps to define data models, define data relationships, and/or develop code. Relying on human efforts alone may also lead to inaccuracies and/or inconsistencies.

### SUMMARY

Examples of the disclosure enable an entire application to be built based on relatively simple user input. In one aspect, a method is provided for generating code for an automated machine. The method includes receiving input data defining a set of specifications for the automated machine. The set of specifications includes one or more of hardware specifications, operating systems, software frameworks, runtime environments, network connectivity, and environmental considerations. The input data is analyzed to retrieve relevant information from a large corpus including a plurality of libraries. One or more prompts are generated based on the relevant information, and the one or more prompts are used to generate programmable logic controller (PLC) code including a sequence of operations for controlling the automated machine.

In another aspect, a system is provided for generating code for an automated machine. The system includes a requirements checker configured to receive user input and analyze the user input to determine one or more specifications. The one or more specifications includes one or more of hardware specifications, operating systems, software frameworks, runtime environments, network connectivity, and environmental considerations. The system further includes a retriever-augmented-generation orchestrator configured to analyze the user input to retrieve relevant information from a large corpus and generate one or more prompts based on the retrieved relevant information, and a code generator-evaluator configured to generate code based on the one or more prompts and evaluate the generated code for readability, relevancy, compliance, contextual appropriateness, accuracy, and functionality.

In yet another aspect, a computing system is provided. The computing system includes one or more computer storage media including data and computer-executable instructions, and one or more processors configured to execute the computer-executable instructions to receive input data defining a set of specifications for an automated machine. The set of specifications include one or more of hardware specifications, operating systems, software frameworks, runtime environments, network connectivity, and environmental considerations. The input data is analyzed to retrieve relevant information from a large corpus including a plurality of libraries. One or more prompts are generated based on the relevant information, and the one or more prompts are used to generate programmable logic controller (PLC) code including a sequence of operations for controlling the automated machine.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 is a block diagram illustrating an example environment;
FIG. 2 is a block diagram illustrating an example system for generating code for use in an automation or control system, such as the environment illustrated in FIG. 1;
FIG. 3 shows an example framework for generating code using the system shown in FIG. 2;
FIG. 4 shows example criteria that may be used for evaluating code generated using the system shown in FIG. 2;
FIG. 5 is a flow chart illustrating an example method for generating code using the system shown in FIG. 2;
FIG. 6 shows an example screenshot which may be presented using the system shown in FIG. 2 before initial correlation training;
FIG. 7 shows an example screenshot which may be presented using the system shown in FIG. 2 after initial correlation training;
FIG. 8 shows another example screenshot which may be presented using the system shown in FIG. 2 before initial correlation training;
FIG. 9 shows another example screenshot which may be presented using the system shown in FIG. 2 after initial correlation training;
FIG. 10 is a computer architecture diagram illustrating an computing system that may be used to perform one or more computing operations in the environment illustrated in FIG. 1 and/or the system illustrated in FIG. 2; and

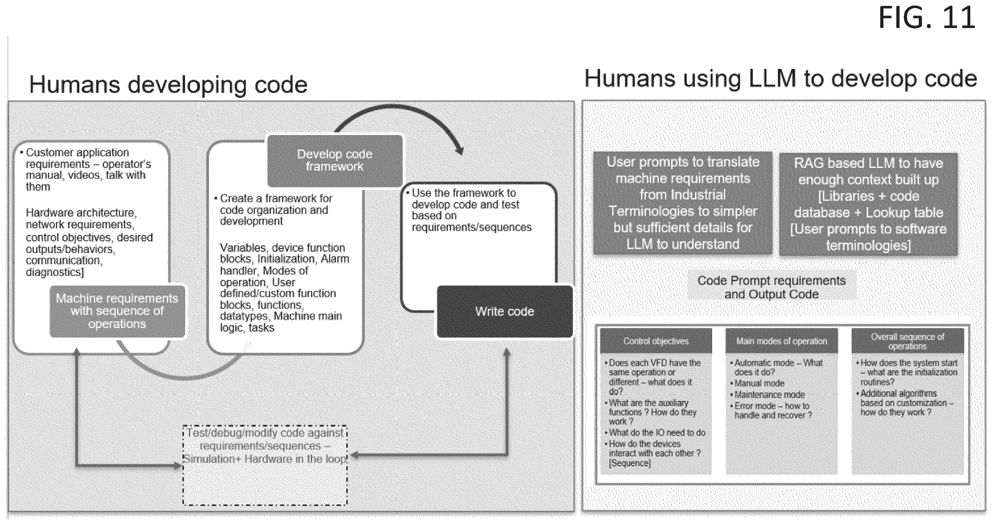

FIG. 11 is a block diagram illustrating differences between humans developing code and humans using large language models to develop code.

Corresponding reference characters indicate corresponding parts throughout the drawings. Although specific features may be shown in some of the drawings and not in others, this is for convenience only. In accordance with the examples described herein, any feature of a drawing may be referenced and/or claimed in combination with any feature of any other drawing.

### DETAILED DESCRIPTION

The present disclosure relates to automated systems and, more particularly, to systems and methods for generating programmable logic controller (PLC) code for use within an automation or control system. Examples described herein take user input and generate one or more instructions or prompts for building and an entire application based at least in part on the user input. In this manner, the examples described herein may assist human engineers in translating high-level machine requirements into simpler prompts for generating code. In some examples, one or more agents based on large language models (LLMs) may be used to correlate the high-level machine requirements to one or more libraries and/or to use one or more function blocks within the libraries to generate code.

An "agent" in the context of the examples described herein is configured to receive a message or text data or as input, perform one or more operations (e.g., analyze and interpret the input), and output a decision or response that guides the downstream process in the system. For example, the decision or response may trigger one or more actions, adjustments, and/or workflows. In this manner, an agent may function as an intermediary that facilitates transforming text input into one or more decisions that impact how the rest of the system operates.

Unless defined otherwise, all technical and scientific terms used herein have the same meaning as commonly understood by one of ordinary skill in the art to which the disclosure belongs. Although any methods and materials similar to or equivalent to those described herein may be used in the practice or testing of the present disclosure, example systems and methods are described below.

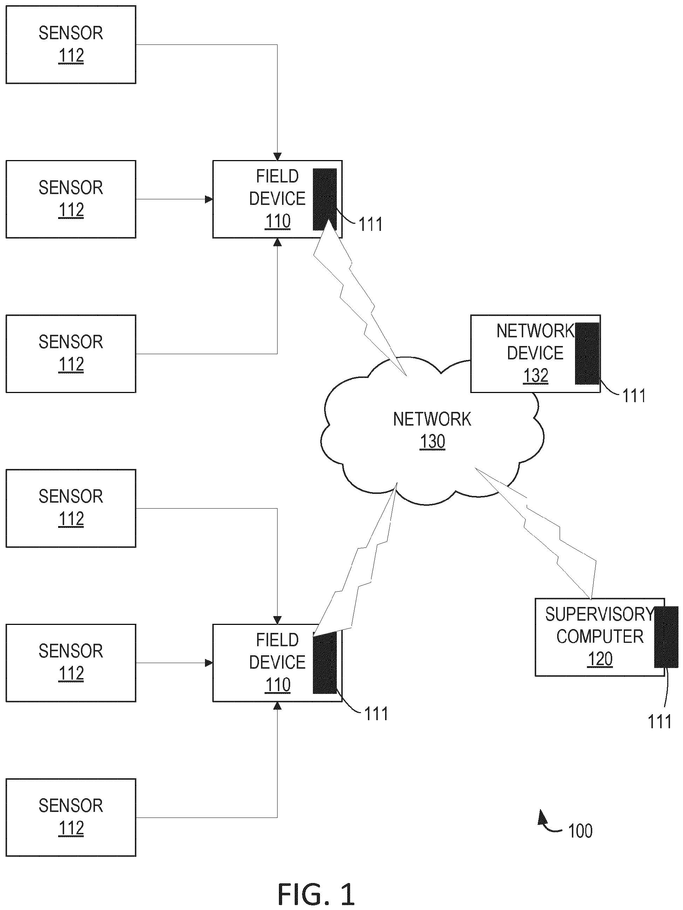

FIG. 1 shows an example industrial control system (ICS) 100 for managing and/or automating one or more processes and/or machinery. As shown in FIG. 1, the ICS 100 may include a plurality of entities including field devices 110, sensors 112, and/or supervisory computers 120. In some examples, a field device 110 may be or include a programmable logic controller (PLC) 111 configured to receive or collect sensor information from one or more sensors 112. Additionally or alternatively, the field device 110 may be or include a remote terminal unit (RTU) and/or an intelligent electronic device (IED) configured to receive or collect sensor information from one or more sensors 112. In some examples, the field devices 110 are spread out across a widely-dispersed infrastructure to facilitate monitoring and/or controlling one or more industrial processes and/or machinery.

A supervisory computer 120 may be used to monitor and/or control the field devices 110 and/or sensors 112. For example, the supervisory computer 120 may receive or collect the sensor information from the field devices 110 and analyze the sensor information to facilitate monitoring and/or controlling one or more industrial processes and/or machinery. In some examples, the supervisory computer 120 may be or include a PLC 111 configured to receive or collect the sensor information, and/or other device information, from one or more field devices 110. In some examples, the supervisory computer 120 is configured to automatically operate and/or reconfigure one or more field devices 110 based on the sensor information and/or device information.

The supervisory computer 120 is communicatively coupled to the field devices 110 via a network 130. In some examples, the network 130 is an ICS network that connects the supervisory computer 120 to the field devices 110 for automation and process control applications. As shown in FIG. 1, the network 130 may include one or more network devices 132. In some examples, the network device 132 may be or include a PLC 111 configured to receive or collect sensor information and/or device information from the field devices 110 and/or supervisory computer 120. Additionally or alternatively, the network device 132 may be or include a firewall, unidirectional gateway, and/or data diode that facilitates protecting the field devices 110 and/or supervisory computer 120 from external threats.

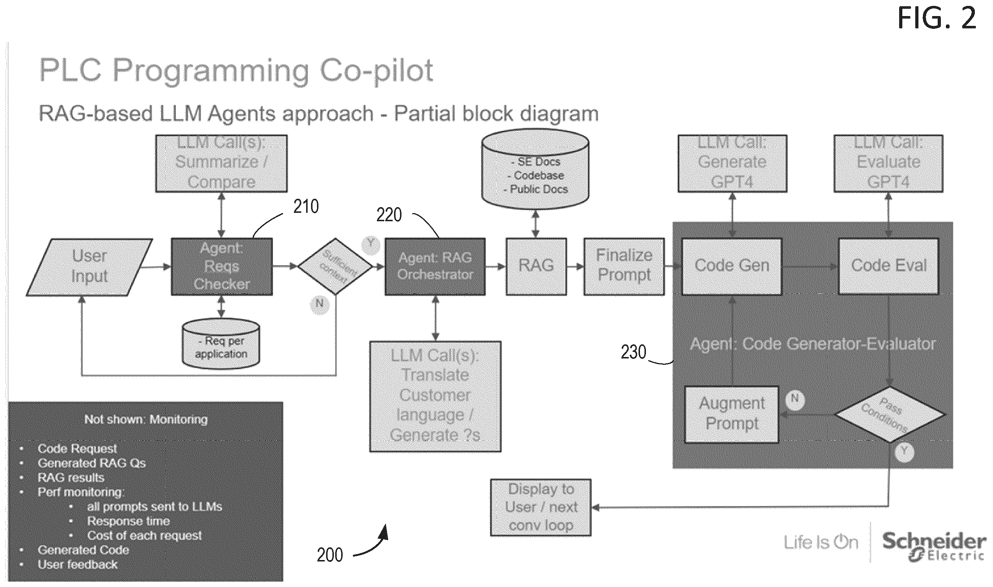

FIG. 2 shows an example system 200 that may be used to generate code for use in the ICS 100. In some examples, the code may be generated for use in a PLC 111 (e.g., in a field device 110, supervisory computer 120, network device 132). Additionally or alternatively, the code may be generated for use in other hardware to provide PLC-like functionality through software-based control algorithms or modules. In this manner, the code generated by the system 200 may be used in devices including a PLC 111 and/or devices which do not include a PLC. While the system 200 is described in regard to controlling and/or monitoring aspects of the ICS 100, one of ordinary skill in the art would understand and appreciate that the system 200 may be used to monitor a wide range of environments for various stimuli, features, and/or parameters.

In some examples, the system 200 may include an agent acting as a requirements checker 210 that receives user input. The requirements checker 210 may include or communicate with alarge language model (LLM) configured to analyze the user input and determine one or more machine requirements or specifications for effectively performing one or more functions. Such machine requirements may include hardware specifications, operating systems, software libraries, software frameworks, runtime environments, network connectivity, environmental considerations (e.g., temperature, humidity, vibration tolerance, etc.), regulatory compliance, industry standards, etc. In some examples, the requirements checker 210 may determine whether there is sufficient context to understand the user input and/or determine one or more machine requirements. If there isn't sufficient context, the requirements checker 210 may prompt the user for additional user input. For example, analyzing the input data may include determining a confidence level of understanding the input data, comparing the confidence level with a predefined threshold, and prompting the user for additional user input if or when the confidence level is below the predefined threshold.

The system 200 may include an agent acting as a retriever-augmented-generation (RAG) orchestrator 220 configured to generate accurate, relevant, and contextually-appropriate prompts based on the user input. The RAG orchestrator 220 may include or communicate with a retrieval component configured to retrieve relevant information from a large corpus or database (e.g., based on the user input), a generator component configured to generate a response (e.g., RAG) based on the retrieved relevant information, and a orchestrator component configured to manage or control the flow of information and/or control between the retrieval component and the generator component. In some examples, the relevant information may be determined using an LLM. For example, the LLM may be used to analyze the input data and determine one or more machine requirements or specifications based on the input data. The relevant information may then be determined based at least in part on the machine requirements or specifications.

In some examples, the RAG orchestrator 220 may include or communicate with an LLM configured to analyze the RAG and generate one or more prompts for use in generating code. The system 200 may include an agent acting as a code generator-evaluator 230 configured to generate accurate, relevant, and contextually-appropriate code based on the prompts. In some examples, the code generator-evaluator 230 may facilitate reducing errors by adhering to predefined templates, standards, and/or best practices. The code generator-evaluator 230 may include or communicate with a code generator component configured to generate code based on the prompts, and a code evaluator component configured to evaluate the generated code for readability, relevancy, compliance, contextual appropriateness, accuracy, and/or functionality. For example, the code evaluator component may be used to determine whether the generated code satisfies one or more conditions. In regard to readability, the code evaluator component may be used to determine how well formatted the code is. In regard to relevancy, the code evaluator component may be used to determine to what extent the code is helpful to the user. In regard to compliance, the code evaluator component may be used to determine whether the standards or best practices are being followed. In regard to contextual appropriateness, the code evaluator component may be used to determine whether the correct libraries and/or functions are being used and/or whether the libraries and/or functions are being used correctly. In regard to accuracy, the code evaluator component may be used to determine to what extent the code is technically correct in terms of syntax, structure, etc. In regard to functionality, the code evaluator component may be used to determine how well the code handles invalid inputs, unexpected behaviors and/or potential errors and/or how well the code prevents crashes. If the generated code does not satisfy one or more conditions, the code generator component may be prompted to augment the generated code or generate new code. In some examples, the code generator-evaluator 230 may include or communicate with one or more LLMs for use in generating and/or evaluating code.

During operation, the requirements checker 210, RAG orchestrator 220, and code generator-evaluator 230 perform their respective operations in a "black box". In this manner, a user may interact with the inputs and outputs of the system 200 without understanding the internal workings of the system 200. From the user's perspective, the user provides user input to the system 200 and then sees a response including the code on a display. For example, the internal workings may include evaluating various aspects of PLC code to ensure that it performs effectively and/or satisfies one or more standards. In some examples, the PLC code is compared with one or more predefined templates, standards, and/or best practices. This may include evaluating the clarity of comments, the organization of the code, and/or adherence to one or more naming conventions to ensure that it can be easy to read and/or understand. In this manner, the PLC code may be easily followed by others who may need to review or maintain it. In some examples, the PLC code is evaluated for relevancy or pertinence to one or more machine requirements or specifications and/or to a particular task or process it is designed to control. This may involve verifying that the code effectively addresses the goals and/or requirements of the application or system it is intended for. In some examples, the PLC code is evaluated for adherence with one or more industry standards, organizational guidelines, best practices, and/or regulatory requirements. In some examples, the PLC code is evaluated for suitability and/or appropriateness for one or more desired functions. This may involve assessing whether the code is suitable for a particular context in which it is used, including hardware, software environment, and/or operational conditions. Additionally or alternatively, this may involve verifying that the code performs the desired functions and/or achieves its intended purpose accurately and/or without errors according to one or more defined requirements.

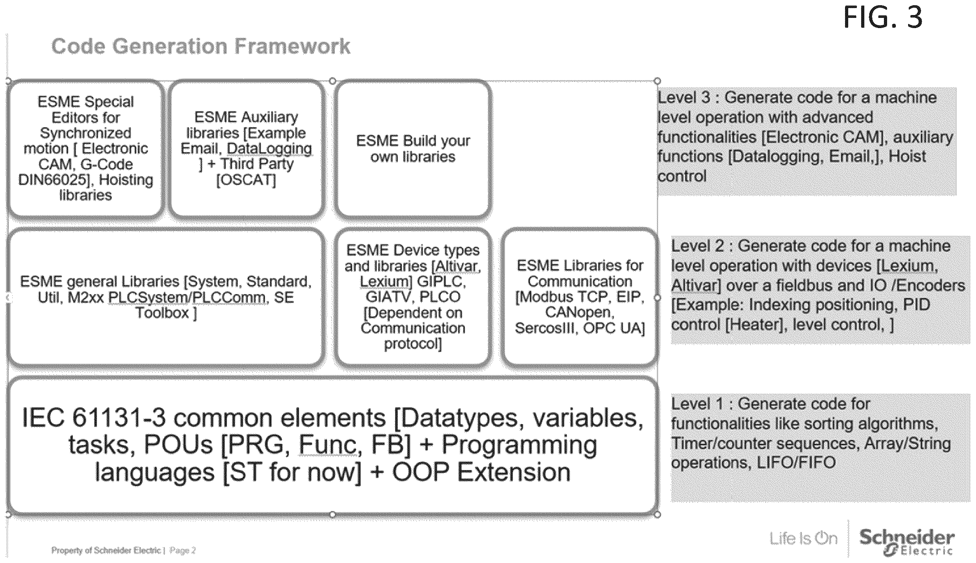

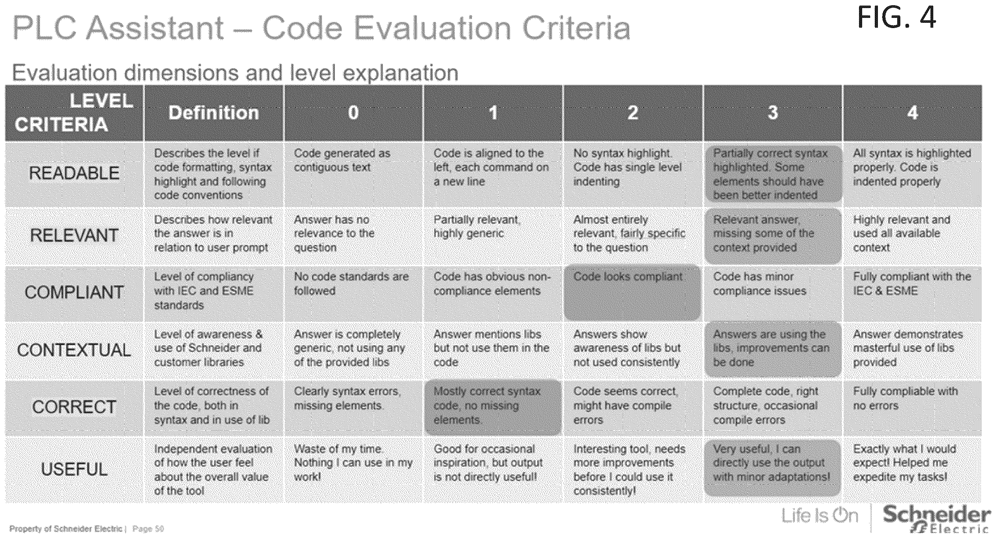

FIG. 3 shows an example framework for generating code, and FIG. 4 shows example criteria for evaluating generated code. Automated code generation may promote consistency across different parts of the control system, which may lead to more reliable and maintainable systems and/or reduce the likelihood of errors caused by manual coding inconsistencies, especially in complex systems with numerous interdependent components. For example, the code generator-evaluator 230 may ensure uniformity in code structure by enforcing coding conventions, naming conventions, and/or design patterns. The code generator-evaluator 230 may also be used to generate documentation alongside the code, providing additional information regarding the system architecture, signal flow, and/or logic structure which may be helpful for troubleshooting, maintenance, and/or knowledge transfer. In some examples, the code generator-evaluator 230 may enhance interoperability and/or streamline the development process by facilitating integration with other software tools and systems, such as simulation software, HMI/SCADA systems, and/or database interfaces.

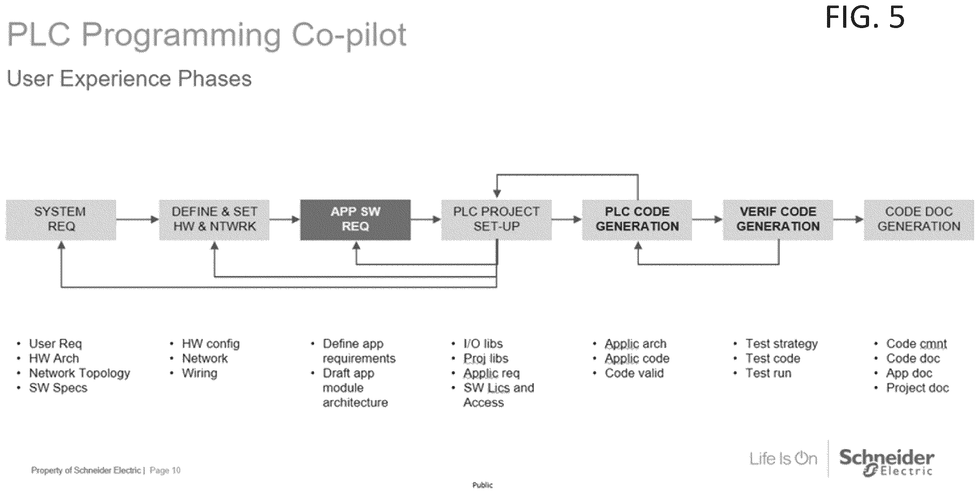

FIG. 5 shows an example method for use in generating code. In some examples, one or more system requirements may be obtained. The system requirements may be received by the requirements checker 210 as user input, for example. Example system requirements may include user requirements, hardware requirements, network requirements, and/or software requirements. In some examples, the system requirements may be used to determine and/or identify one or more control objectives, as well as the functionality of each field device 110, including input/output requirements and interactions with one or more other devices (e.g., field device 110, supervisory computer 120, etc.). The system requirements may then be used to set and/or define one or more hardware parameters, network parameters, software parameters, etc. for use in drafting an application module architecture to set up the PLC project. In some examples, the RAG orchestrator 220 may use or coordinate with one or more libraries (e.g., I/O libraries, project libraries, etc.) to facilitate setting up the PLC project for automated code generation. The code may then be generated and/or evaluated in accordance with predefined frameworks, templates, standards, and/or best practices. The code may be used to delineate one or more sequence of operations, including main modes of operation and initialization routines. In some examples, the code generator-evaluator 230 may generate documentation alongside the code.

For example, an XYZ customer machine may be fully programmable so every cut length is fast and accurate. It may use a 30" linear actuator, driven by a servo motor. With its 12-1/2" blade, it may be used to cut up to 3-1/2" diameter tube or pipe and up to 1-3/4" solid material, while maintaining a length tolerance of +/- .006" per inch and a squareness tolerance of +/- .002" per diameter inch.

The XYZ customer machine standard features may include a 10" touch screen control, an unlimited length setting with a 30" single length shuttle, and a variable speed control. Switching to a different part length may take a few seconds, and the initial cut is consistently accurate. The XYZ customer machine enables programming of a set length with a specific number of pieces or of a plurality of separate lengths and/or amounts in sequence.

The LLMs may use or incorporate various resources, including a relevant document list, libraries, and code databases. Examples include a motion control library, a variable frequency drive library, a programming guide with operators, operands, and datatypes, a CoDeSys standard and utility library, a helper library from OSCAT, and/or an IEC61131-3 programming language and common elements. In some examples, the LLMs may be trained to determine which questions or keywords to use when searching the various resources. For example, when the user input and/or prompt includes the term "servo", "indexing", or "positioning", the LLMs may be used to locate the motion control library and the relevant function blocks within it because an indexing and sawing application may use servo drive control blocks. For another example, when the user input and/or prompt includes the term "VFD", "drive", or "sawing", the LLMs may be used to locate the variable frequency drive library and relevant function blocks within it.

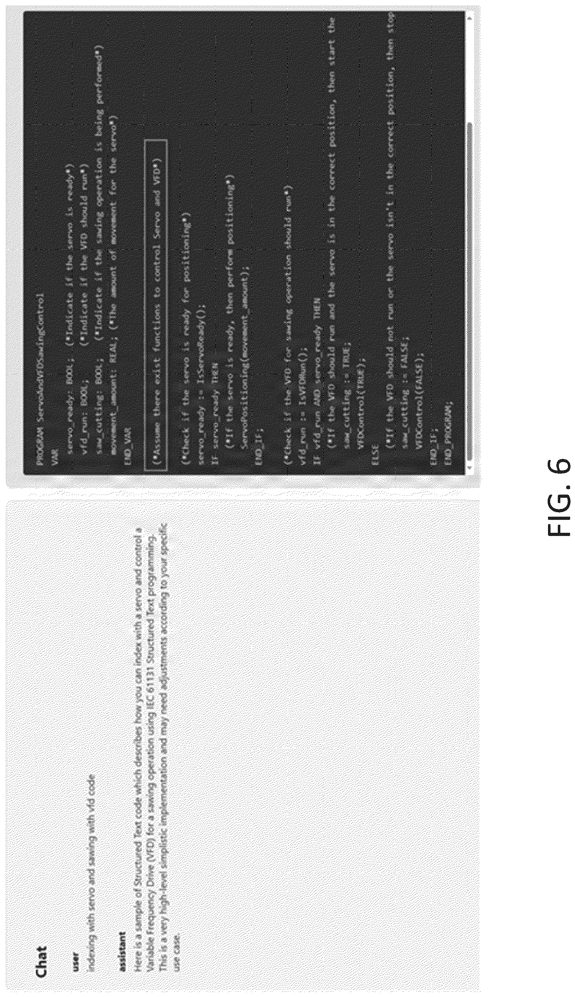

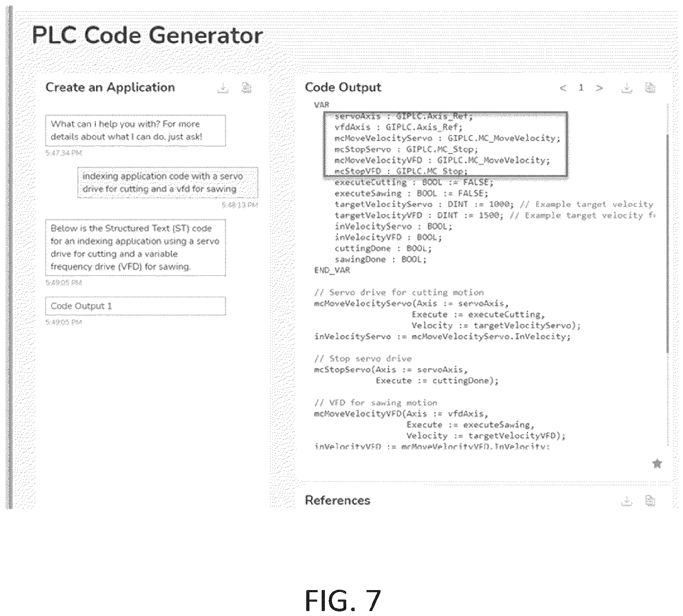

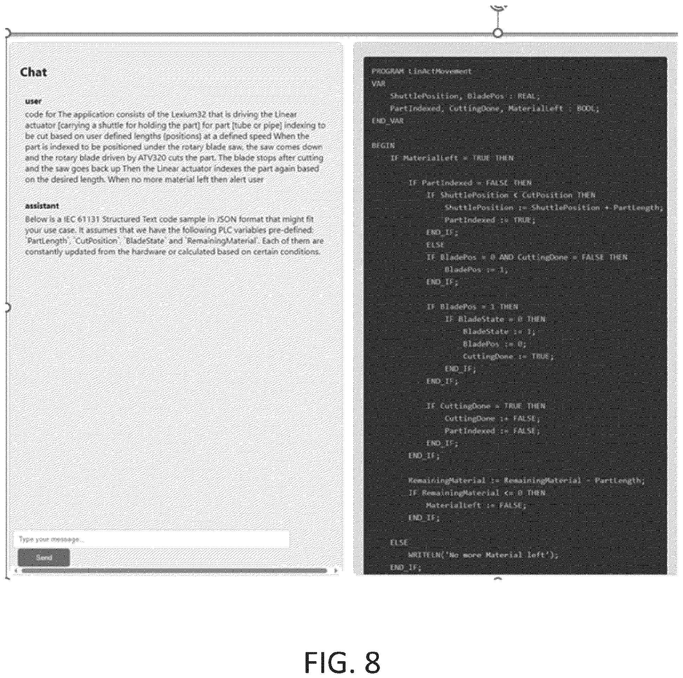

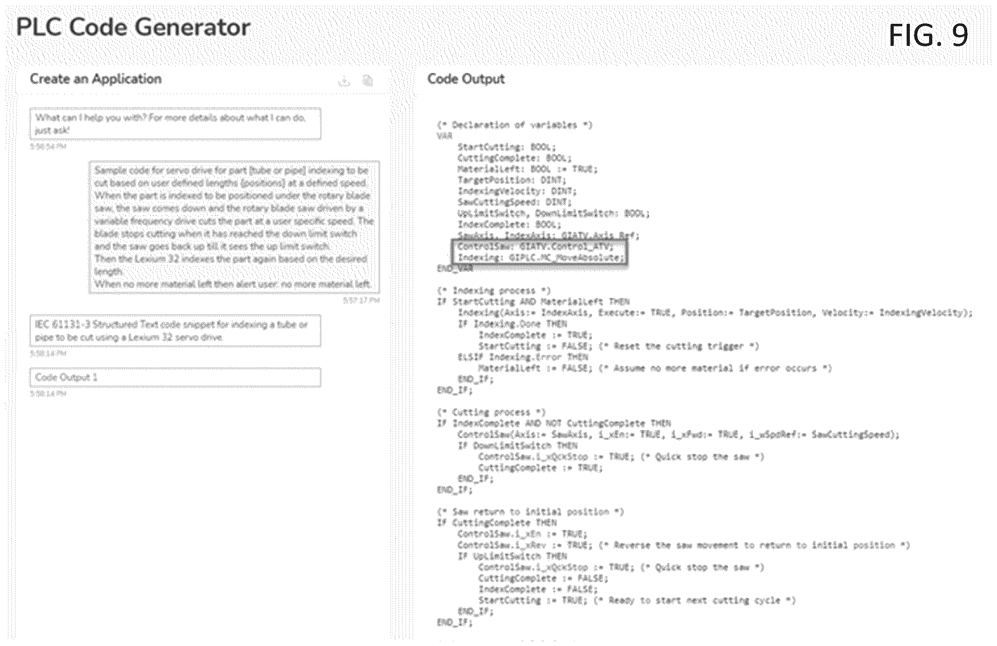

It should not be assumed that the user will specifically ask, "What kind of servo drive control blocks do you have?" Moreover, without initial correlation training, the LLMs may not be aware of the libraries that exist or how to use them. Accordingly, the LLMs may be trained or augmented to know what to search for within the various resources. FIG. 6 shows an example user input which reads "indexing with servo and sawing with vfd code" and an example response which may be generated without initial correlation training. As shown in FIG. 6, without initial correlation training, the LLMs may assume that the functions to control Servo and VFD already exist. As shown in FIG. 7, after correlation training, the LLMs may be configured to bring in the correct library namespace and function blocks for servo and vfd control. FIG. 8 shows a more-detailed user input and an example response which may be generated without initial correlation training. As shown in FIG. 8, without initial correlation training, the LLMs may assume that the functions to control Servo and VFD already exist, and the code may be limited. As shown in FIG. 9, after correlation training, the LLMs may be configured to bring in the correct library namespace and function blocks for servo and vfd control, and the code may be correlated closer to the user input.

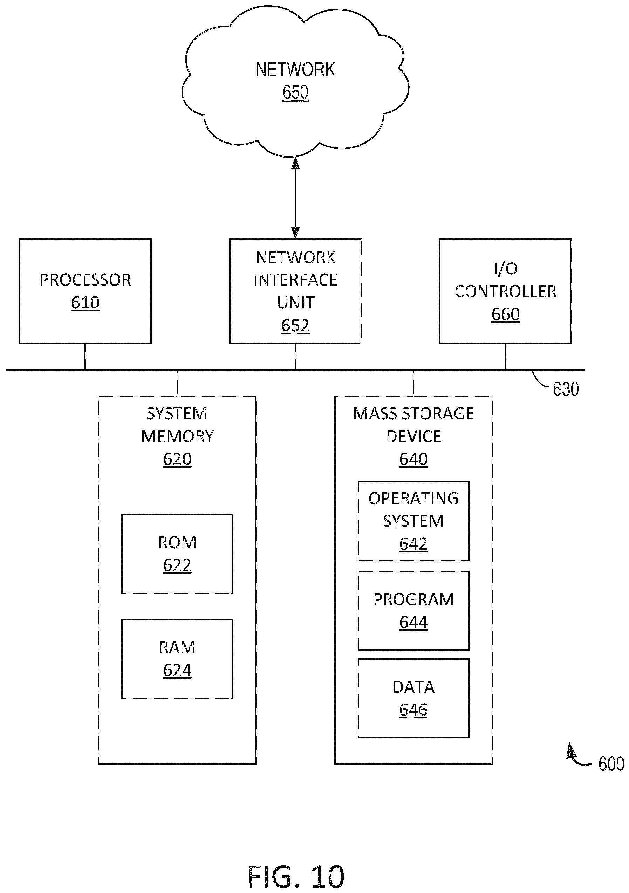

FIG. 10 shows an computing system 600 (e.g., field device 110, PLC 111, supervisory computer 120, network device 132, system 200) configured to perform one or more computing operations described herein. In some examples, the computing system 600 includes a processor 610, a system memory 620, and a bus 630 coupling various system components including the system memory 620 to the processor 610.

The processor 610 is configured to perform general computing functions and process data and instructions to perform one or more operations and/or provide other functionality described herein. For example, the processor 610 may access the system memory 620 to read data and instructions from and/or write data and instructions to the system memory 620 for use in executing one or more computer-executable instructions. In this manner, the processor 610 may be programmed to execute any aspect of the software components described herein, including software components for implementing the requirements checker 210 (shown in FIG. 2), the RAG orchestrator 220 (shown in FIG. 2), and/or the code generator-evaluator 230 (shown in FIG. 2). In some examples, the processor 610 may be or include any quantity of processing units including a central processing unit, a graphics processing unit, a field-programmable gate array (FPGA), a digital signal processor (DSP), or other hardware logic components including, without limitation, an Application-Specific Integrated Circuit (ASIC), Application-Specific Standard Product (ASSP), System-on-a-Chip System (SOC), Complex Programmable Logic Device (CPLD), etc.

The system memory 620 includes any combination of computer-readable media that may be accessed by the processor 610. In some examples, the system memory 620 includes a read-only memory (ROM) 632 which stores instructions for executing basic functions and a random access memory (RAM) 634 which temporarily stores data and instructions for actively used programs.

Computer-readable media includes both communication media and computer storage media. Communication media typically embody computer-readable instructions, data structures, program modules, or other data in a modulated data signal, such as a carrier wave or other transport mechanism. The term "modulated data signal" means a signal that has one or more of its characteristics set or changed in a manner as to encode information in the signal. By way of example, and not limitation, communication media includes wired media, such as a wired network or direct-wired connection, and wireless media, such as acoustic, radio frequency, and infrared media.

In contrast, computer storage media include tangible forms of media that can store information such as computer-readable instructions, data structures, program modules, or other data. By way of example, and not limitation, computer storage media includes ROM 632, RAM 634, hard disk drives (HDDs), solid-state drives (SSDs), external hard drives, flash drives, optical storage media (e.g., compact discs (CDs), digital versatile discs (DVDs), and magnetic storage media (e.g., tape drives). For purposes of the present disclosure, computer storage media is mutually exclusive to communication media and excludes waves, signals, and other transitory or intangible forms of media.

It should be appreciated that the software components described herein, when loaded into the processor 610 and executed, may transform the processor 610 and the overall computing system 600 from a general-purpose computing system into a special-purpose computing system customized to facilitate the functionality described herein. More specifically, the computer-executable instructions contained within the software components described herein transform the processor 610 to operate or function as a finite-state machine by specifying how the processor 610 transitions between states, thereby transforming the transistors or other discrete circuit elements constituting the processor 610.

Encoding the software components described herein may also transform the physical structure of the computer-readable media described herein. The specific transformation of physical structure may depend on various factors, in different implementations of the present disclosure. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the transistors, capacitors, or other discrete circuit elements constituting the semiconductor-based memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In some examples, the computing system 600 includes a mass storage device 640 coupled to the processor 610 for hosting or storing data and instructions, such as an operating system 642, one or more programs 644 (e.g., requirements checker 210, RAG orchestrator 220, code generator-evaluator 230), and/or data 646. One of ordinary skill in the art would understand that copies of at least some data and/or instructions hosted or stored in the mass storage device 640 may be at least temporarily stored in the system memory 620 to enable the computing system 600 to function as described herein.

As shown in FIG. 6, the computing system 600 may connect to a network 650 (e.g., network 130) through a network interface unit 652 connected to the bus 630. In this manner, the computing system 600 may operate in a networked environment in which the computing system 600 may use one or more remote devices (not shown) to host or store at least some data and/or to execute at least some instructions. For example, the computing system 600 may include one or more client-side applications that perform one or more operations at the computing system 600 while one or more operations are performed remotely (e.g., in the "cloud"). Computer communication between computing systems can be a network transfer, a file transfer, an applet transfer, an email, a hypertext transfer protocol (HTTP) transfer, and so on.

In some examples, the computing system 600 may include one or more input/output (I/O) controllers 660 that facilitate communication and data transfer between the processor 610 and one or more I/O devices (not shown) configured to provide input and/or output capabilities. For example, a user may enter commands and information into the computing system 600 using one or more input devices, such as a keyboard, pointing device (e.g., mouse, trackball, touch pad, stylus), microphone, camera, scanner, accelerometer, and the like. Additionally or alternatively, the computing system 600 may present various forms of information, such as text, images, audio, video, alerts, and the like, using one or more output devices, such as a monitor, projector, printer, speaker, actuator, and the like. In some examples, the output device may be integrated with the input device (e.g., in a touchscreen panel or in a controller including a vibrating component).

While some examples are illustrated and described herein with reference to the computing system 600 being, including, or being included in the field device 110 (shown in FIG. 1), supervisory computer 120 (shown in FIG. 1), network device 132 (shown in FIG. 1), requirements checker 210 (shown in FIG. 2), RAG orchestrator 220 (shown in FIG. 2), and/or code generator-evaluator 230 (shown in FIG. 2), aspects of the present disclosure are operable with any computing system that can execute computer-executable instructions to implement the operations and functionality associated with the computing system 600. It is also contemplated that the computing system 600 may not include all of the components shown in FIG. 6, may include other components that are not explicitly shown in FIG. 6, or may utilize an architecture completely different than that shown in FIG. 6. The computing system 600 should not be interpreted as having any dependency or requirement relating to any one or combination of components shown in FIG. 6. The computing system 600 is only one example of a computing and networking environment for performing one or more computing operations and is not intended to suggest any limitation as to the scope of use or functionality of the present disclosure.

Example methods and systems are described herein for generating programmable logic controller (PLC) code. The examples described herein take user input and generate one or more instructions or prompts for building an entire application based at least in part on the user input. Automated code generation can lead to cost savings by reducing development time, reducing errors, and/or improving system reliability. Moreover, it can facilitate lowering the learning curve for engineers. In view of the above, it will be seen that several advantages of the aspects of the present disclosure are achieved and other advantageous results attained.

Although described in connection with an example computing system environment, examples of the present disclosure are capable of implementation with numerous other general purpose or special purpose computing system environments, configurations, or devices. Examples of well-known computing systems, environments, and/or configurations that may be suitable for use with aspects of the disclosure include, but are not limited to, server computers, desktop computers, laptop computers, tablets, mobile devices, communication devices in wearable or accessory form factors, microprocessor-based systems, multiprocessor systems, programmable consumer electronics, kiosks, tabletop devices, industrial control devices, minicomputers, mainframe computers, network computers, distributed computing environments that include any of the above systems or devices, and the like.

Examples of the present disclosure may be described in the general context of computer-executable instructions, such as program modules, executed by one or more computers or other devices in software, firmware, hardware, or a combination thereof. The computer-executable instructions may be organized into one or more computer-executable modules or components. Generally, program modules include, but are not limited to, routines, objects, components, and data structures that perform particular tasks or implement particular abstract data types. Aspects of the disclosure may be implemented with any number and organization of such modules or components. For example, aspects of the present disclosure are not limited to the specific computer-executable instructions or the specific components or modules illustrated in the figures and described herein. Other examples of the present disclosure may include different computer-executable instructions or components having more or less functionality than illustrated and described herein.

In some examples, the operations illustrated in the drawings may be implemented as software instructions encoded on a computer readable medium, in hardware programmed or designed to perform the operations, or both. For example, aspects of the present disclosure may be implemented as a system on a chip or other circuitry including a plurality of interconnected, electrically conductive elements.

It is possible for one or more elements of an implementation of an apparatus as described herein to be used to perform tasks or execute other sets of instructions that are not directly related to an operation of the apparatus, such as a task relating to another operation of a device or system in which the apparatus is embedded. It is also possible for one or more elements of an implementation of such an apparatus to have structure in common (e.g., a processor used to execute portions of code corresponding to different elements at different times, a set of instructions executed to perform tasks corresponding to different elements at different times, or an arrangement of electronic and/or optical devices performing operations for different elements at different times).

The order of execution or performance of the operations in examples of the present disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the present disclosure.

The examples illustrated and described herein as well as examples not specifically described herein but within the scope of aspects of the present disclosure constitute example means for managing cryptographic identities. For example, the elements illustrated in FIGS. 1, 2, and 10, when programmed, encoded, or configured to perform the operations illustrated in FIGS. 5, constitute at least an example means for receiving input data defining a set of specifications for the automated machine (e.g., requirements checker 210), analyzing input data to retrieve relevant information from a large corpus (e.g., RAG orchestrator 220), generating one or more prompts based on relevant information (e.g., RAG orchestrator 220), and using one or more prompts to generate programmable logic controller (PLC) code (e.g., code generator-evaluator 230).

When introducing elements of aspects of the disclosure or the examples thereof, the articles "a, " "an," "the," and "said" are intended to mean that there are one or more of the elements. Furthermore, references to an "embodiment" or "example" of the present disclosure are not intended to be interpreted as excluding the existence of additional embodiments or examples that also incorporate the recited features. The terms "comprising," "including," and "having" are intended to be inclusive and mean that there may be additional elements other than the listed elements. The phrase "one or more of the following: A, B, and C" means "at least one of A and/or at least one of B and/or at least one of C."

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

In the present description, reference numbers have sometimes been used in connection with various terms. Where a term is used in connection with a reference number, this may be meant to refer to a specific element that is shown in one or more of the figures. Where a term is used without a reference number, this may be meant to refer generally to the term without limitation to any particular figure.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the aspects of the present disclosure have been described in terms of various examples with their associated operations, a person skilled in the art would appreciate that a combination of operations from any number of different examples is also within the scope of the aspects of the present disclosure.

Accordingly, the present invention may also be described as follows, optionally in combination with one or more of the above-mentioned features of the present invention: Relatively simple user input is used to build an entire application. Input data defines a set of specifications for an automated machine. The set of specifications includes one or more of hardware specifications, operating systems, software frameworks, runtime environments, network connectivity, and environmental considerations. The input data is analyzed to retrieve relevant information from a large corpus including a plurality of libraries. One or more prompts are generated based on the relevant information, and the one or more prompts are used to generate programmable logic controller (PLC) code including a sequence of operations for controlling the automated machine.

## Claims

1. Method for generating code for an automated machine, said method comprising:
receiving input data defining a set of specifications for the automated machine, the set of specifications including one or more of hardware specifications, operating systems, software frameworks, runtime environments, network connectivity, and environmental considerations;
analyzing the input data to retrieve relevant information from a large corpus, the large corpus including a plurality of libraries;
generating one or more prompts based on the relevant information; and
using the one or more prompts to generate programmable logic controller (PLC) code, wherein the PLC code includes a sequence of operations for controlling the automated machine.

2. Method as set forth in Claim 1, wherein analyzing the input data comprises determining a confidence level of understanding the input data, comparing the confidence level with a predefined threshold, and on condition that the confidence level is below the predefined threshold, prompting the user for additional user input.

3. Method as set forth in Claim 1 or Claim 2, wherein analyzing the input data comprises:
using a large language model to determine the relevant information; and optionally
using a large language model to determine one or more machine requirements or specifications and determine the relevant information based on the one or more machine requirements or specifications.

4. Method as set forth in any one of Claims 1 to 3, wherein using the one or more prompts to generate the PLC code comprises comparing the PLC code with one or more predefined templates, standards or best practices.

5. Method as set forth in any one of Claims 1 to 4, wherein using the one or more prompts to generate the PLC code comprises evaluating the PLC code for one or more of clarity, organization, adherence to naming conventions, relevancy to one or more machine requirements or specifications, adherence to one or more standards, best practices, or regulatory requirements, or suitability for one or more desired functions.

6. System for generating code for an automated machine, the system comprising:
a requirements checker configured to receive user input and analyze the user input to determine one or more specifications, the one or more specifications including one or more of hardware specifications, operating systems, software frameworks, runtime environments, network connectivity, and environmental considerations;
a retriever-augmented-generation orchestrator configured to analyze the user input to retrieve relevant information from a large corpus and generate one or more prompts based on the retrieved relevant information; and
a code generator-evaluator configured to generate code based on the one or more prompts and evaluate the generated code for readability, relevancy, compliance, contextual appropriateness, accuracy, and functionality.

7. System as set forth in Claim 6, wherein the requirements checker determines a confidence level of understanding the input data, compares the confidence level with a predefined threshold, and on condition that the confidence level is below the predefined threshold, prompts the user for additional user input.

8. System as set forth in Claim 6 or Claim 7, wherein the retriever-augmented-generation orchestrator uses a large language model to determine one or more machine requirements or specifications and determine the relevant information based on the one or more machine requirements or specifications.

9. System as set forth in any one of Claims 6 to 8, wherein the code generator-evaluator compares the code with one or more predefined templates, standards or best practices.

10. System as set forth in any one of Claims 6 to 9, wherein the code generator-evaluator evaluates the code for one or more of clarity, organization, adherence to naming conventions, relevancy to one or more machine requirements or specifications, adherence to one or more standards, best practices, or regulatory requirements, or suitability for one or more desired functions.

11. Computing system comprising:
one or more computer storage media including data and computer-executable instructions; and
one or more processors configured to execute the computer-executable instructions to:
receive input data defining a set of specifications for an automated machine, the set of specifications including one or more of hardware specifications, operating systems, software frameworks, runtime environments, network connectivity, and environmental considerations;
analyze the input data to retrieve relevant information from a large corpus, the large corpus including a plurality of libraries;
generate one or more prompts based on the relevant information; and
use the one or more prompts to generate programmable logic controller (PLC) code, wherein the PLC code includes a sequence of operations for controlling the automated machine.

12. Computing system as set forth in Claim 11, wherein the one or more processors are further configured to determine a confidence level of understanding the input data, compare the confidence level with a predefined threshold, and on condition that the confidence level is below the predefined threshold, prompt the user for additional user input.

13. Computing system as set forth in Claim 11 or Claim 12, wherein the one or more processors are further configured to use a large language model to determine one or more machine requirements or specifications and determine the relevant information based on the one or more machine requirements or specifications.

14. Computing system as set forth in any one of Claims 11 to 13, wherein the one or more processors are further configured to compare the code with one or more predefined templates, standards or best practices.

15. Computing system as set forth in any one of Claims 11 to 14, wherein the one or more processors are further configured to evaluate the code for one or more of clarity, organization, adherence to naming conventions, relevancy to one or more machine requirements or specifications, adherence to one or more standards, best practices, or regulatory requirements, or suitability for one or more desired functions.
